# EUROPÄISCHE PATENTSCHRIFT

(11) **EP 3 319 850 B1**
(45) Veröffentlichungstag und Bekanntmachung des Hinweises auf die Patenterteilung: **19.06.2019**
(21) Anmeldenummer: 16733057.0
(22) Anmeldetag: 27.06.2016
(51) Int. Cl.: B60T 17/00, B01D 53/26, B01D 53/28

(54) **LUFTTROCKNERPATRONE**
AIR DRYER CARTRIDGE
CARTOUCHE DE DESSICCATEUR D'AIR

(30) Priorität: 25.06.2015 DE 102015110197
(43) Veröffentlichungstag der Anmeldung: 16.05.2018
(73) Patentinhaber: KNORR-BREMSE Systeme für Nutzfahrzeuge GmbH, 80809 München (DE)
(72) Erfinder: SCHÄBEL, Stefan, 84036 Landshut (DE)
(86) Internationale Anmeldenummer: PCT/EP2016/064788
(87) Internationale Veröffentlichungsnummer: WO 2016/207416

(56) Entgegenhaltungen:
- WO-A2-2008/045784
- WO-A2-2013/137486
- WO-A2-2013/186243
- DE-A1- 3 907 167
- DE-A1- 19 815 564
- JP-A- H05 131 139
- US-A- 4 402 717
- US-A- 5 505 769
- US-B1- 6 206 675

## Beschreibung

Die vorliegende Erfindung betrifft eine Lufttrocknerpatrone, insbesondere eine Lufttrocknerpatrone für eine Druckluftaufbereitungsvorrichtung eines Nutzfahrzeugs.

Derartige Druckluftaufbereitungsvorrichtungen bzw. Lufttrocknerpatronen kommen zum Beispiel in Nutzfahrzeugen wie Lastkraftwagen und Traktoren zum Einsatz. Diese verfügen häufig über einen oder mehrere Druckluftverbraucher wie zum Beispiel Bremssysteme oder Luftfederungen, die mit Druckluft versorgt werden müssen. Die Druckluft wird typischerweise von einem Kompressor, zum Beispiel einem von einem Antriebsmotor des Fahrzeugs angetriebenen Hubkolbenkompressor, zur Verfügung gestellt. Um einen störungsfreien Betrieb der Druckluftverbraucher zu gewährleisten, muss die vom Kompressor bereitgestellte Druckluft üblicherweise weiter aufbereitet werden. Bei dieser Aufbereitung wird die Druckluft von Schmutzpartikeln, die bereits in der angesaugten Luft enthalten waren, sowie Öl- und Rußpartikeln, die während des Verdichtungsprozesses in die Druckluft eingetragen wurden, gereinigt und wird in der Druckluft vorhandene Feuchtigkeit abgeschieden. Zu diesem Zweck verfügen beispielsweise Druckluftaufbereitungsvorrichtungen von Nutzfahrzeugen über Lufttrocknerpatronen, die Öl- und Schmutzpartikel sowie Feuchtigkeit aufnehmen können.

Herkömmliche Lufttrocknerpatronen weisen zum Beispiel ein oder mehrere Filter zum Abtrennen von Öl- und Schmutzpartikeln aus der Druckluft und ein Trockenmittelgranulat zum Entziehen der Feuchtigkeit aus der Druckluft auf. Eine solche herkömmliche Lufttrocknerpatrone ist zum Beispiel in der WO 2013/057088 A1 oder in der WO 2013/186243 A1 offenbart.

Das Trockenmittelgranulat ist in der Regel in einem axial durchströmbaren Trockenmittelbehälter aufgenommen, der in einem Patronengehäuse der Lufttrocknerpatrone angeordnet ist. Dieser Trockenmittelbehälter kann mit einem axial durchströmbaren und axial beweglichen Deckel verschlossen sein. Mit einem Federelement wird auf diesen Deckel eine Kraft ausgeübt, die verhindern soll, dass sich die Granulatkugeln des Trockenmittels bei Vibrationen gegenseitig aufreiben und es zur Bildung von Stäuben kommt. Durch Vibrationen kann außerdem eine Verdichtung des Granulats auftreten. Die entsprechende Volumenreduzierung wird ebenfalls durch den federbelasteten Deckel ausgeglichen, wobei die verbleibende Federkraft in der Regel ausreicht, eine übermäßige Staubbildung im Trockenmittelgranulat zu verhindern.

Bei ungünstigen Einsatzbedingungen, beispielsweise bei hohem Luftverbrauch in der Druckluftanlage des Nutzfahrzeugs mit einem daraus resultierenden sogenannten "Nassfahren" der Lufttrocknerpatrone kann es dennoch zu einer verstärkten Staubbildung des Trockenmittels kommen. Um dabei entstehende kleinere Granulatkugeln bzw. Granulatbruch zurückzuhalten, wird im Boden des Trockenmittelbehälters sowie zwischen dem Granulat und dem Deckel des Trockenmittelbehälters ein geeignetes Filtermaterial verbaut. Alternativ können der Boden und der Deckel des Trockenmittelbehälters eine so feine Siebstruktur aufweisen, dass auf die Filter verzichtet werden kann.

Der Erfindung liegt die Aufgabe zugrunde, eine verbesserte Lufttrocknerpatrone mit einem vereinfachten Aufbau zu schaffen.

Diese Aufgabe wird gelöst durch eine Lufttrocknerpatrone mit den Merkmalen des unabhängigen Anspruchs 1. Besonders vorteilhafte Ausgestaltungen der Erfindung sind Gegenstand der abhängigen Ansprüche.

Die Lufttrocknerpatrone der Erfindung weist ein Patronengehäuse mit wenigstens einer Lufteinströmöffnung und wenigstens einer Luftausströmöffnung auf. In diesem Patronengehäuse ist in einem Strömungskanal zwischen der wenigstens einen Lufteinströmöffnung und der wenigstens einen Luftausströmöffnung wenigstens ein Formkörper angeordnet, der eine Vielzahl von durch ihn hindurch verlaufenden Luftströmungskanälen aufweist und der aus einem Trockenmittel gefertigt ist.

Gemäß der Erfindung wird ein Formkörper aus Trockenmittel verwendet, um der durch die Lufttrocknerpatrone hindurch strömenden Luft Feuchtigkeit zu entziehen. Da im Gegensatz zu den eingangs beschriebenen herkömmlichen Lufttrocknerpatronen insbesondere kein Trockenmittelgranulat zum Einsatz kommt, kann auf einen Deckel für den Trockenmittelbehälter, ein entsprechendes Federelement zum Anpressen eines solchen Deckels und Filter oder Siebe an Deckel und Boden des Trockenmittelbehälters zum Zurückhalten von Trockenmittelstaub und Granulatbruch verzichtet werden. Der Aufbau der Lufttrocknerpatrone kann deshalb vereinfacht werden und weniger Bauteile enthalten.

Durch den Wegfall eines Deckels und eines Federelements für den Trockenmittelbehälter kann sich der Formkörper weiter in das Patronengehäuse der Lufttrocknerpatrone hinein erstrecken. Die Lufttrocknerpatrone kann daher bei gleichen Außenmaßen einen größeren Formkörper, d.h. mehr Trockenmittel aufnehmen als eine herkömmliche Trockenmittelpatrone mit Trockenmittelgranulat, sodass die Lufttrocknungsleistung der Lufttrocknerpatrone erhöht werden kann. Alternativ können bei gleich bleibender Trocknungsleistung die Abmessungen der Lufttrocknerpatrone reduziert werden, sodass Bauraum eingespart werden kann.

Der Formkörper mit seinen Luftströmungskanälen bietet die Möglichkeit, gezielt an die jeweiligen Anforderungen der Lufttrocknerpatrone angepasst zu werden. So können zum Beispiel je nach gewünschter Trocknungsleistung und/oder Standzeit der Lufttrocknerpatrone die Gestaltung und die Dimensionierung der Luftströmungskanäle durch den Formkörper angepasst werden.

Da die erfindungsgemäße Lufttrocknerpatrone kein Trockenmittel in Granulatform verwendet, kann auch keine Staubbildung durch gegenseitigen Abrieb von Granulatkugeln entstehen. Die Gefahr von Beeinträchtigungen nachfolgender Komponenten, insbesondere nachfolgender Druckluftverbraucher, durch Staub und daraus resultierende Sicherheitsrisiken können somit reduziert werden.

Der Formkörper der erfindungsgemäßen Lufttrocknerpatrone weist eine Vielzahl von Luftströmungskanälen auf und kann deshalb vorzugsweise auch als eine Art Koaleszenzfilter dienen. Je nach Ausgestaltung der Lufttrocknerpatrone kann so die Möglichkeit bestehen, auf zusätzliche Koaleszenzfilter in oder an der Lufttrocknerpatrone zu verzichten. Die durch die Luftströmungskanäle hindurch strömende Druckluft kann klebrige Substanzen wie Öle enthalten, die an den Wandungen der Luftströmungskanäle haften bleiben können. Diese an den Wandungen haftenden klebrigen Substanzen können dann zum Beispiel in der Druckluft enthaltene Schmutzpartikel auffangen.

Der Begriff Formkörper soll in diesem Zusammenhang jede Art eines eigenstabilen, einstückig gefertigten Körpers umfassen. Der Formkörper kann grundsätzlich durch ein beliebiges Formgebungsverfahren gefertigt werden. Vorzugsweise können ein Extrusionsverfahren, ein schichtweises Aufbauverfahren oder dergleichen verwendet werden. Die Luftströmungskanäle können vorzugsweise während der Fertigung des Formkörpers in diesen eingebracht oder nach der Fertigung des Formkörpers in diesem ausgebildet (z.B. gebohrt, gefräst, etc.) werden.

Die Luftströmungskanäle können vorzugsweise im Wesentlichen parallel zueinander durch den Formkörper hindurch verlaufen. Außerdem können die Luftströmungskanäle im Wesentlichen geradlinig ausgestaltet sein oder ein- oder mehrfach gekrümmt sein oder spiralförmig verlaufen.

Der Begriff Trockenmittel soll in diesem Zusammenhang alle Materialien umfassen, die in der Lage sind, Feuchtigkeit zu adsorbieren und zu speichern. Die Adsorptionskapazität des Trockenmittels beträgt bei 23°C und 40% relativer Luftfeuchte vorzugsweise wenigstens etwa 10 Gewichtsprozent, bevorzugter wenigstens etwa 15 Gewichtsprozent. Das Trockenmittel für den Formkörper der erfindungsgemäßen Lufttrocknerpatrone ist vorzugsweise ausgewählt aus Molekularsieben (Zeolithe), Kieselgel und Trockenton (Betonit). Der Formkörper aus Trockenmittel ist vorzugsweise regenerierbar.

In einer Ausgestaltung der Erfindung können die Luftströmungskanäle des Formkörpers vorzugsweise jeweils eine im Wesentlichen kreisförmige Querschnittsform haben. Die kreisförmige Querschnittsform bietet eine besonders große Oberfläche bei vorgegebener Querschnittsfläche, sodass die Trocknungsleistung auf diese Weise erhöht werden kann.

In einer Ausgestaltung der Erfindung können die Luftströmungskanäle des Formkörpers vorzugsweise im Wesentlichen hexagonal nebeneinander angeordnet sein. Die hexagonale Anordnung erzielt eine besonders kompakte Anordnung der Luftströmungskanäle, sodass bei vorgegebenem Bauraum für den Formkörper die Trocknungsleistung erhöht werden kann.

In einer weiteren Ausgestaltung der Erfindung können die Wände der Luftströmungskanäle des Formkörpers vorzugsweise strukturiert ausgebildet sein. Durch die Strukturierung kann die Oberfläche vergrößert werden, sodass die Trocknungsleistung erhöht werden kann. Außerdem kann durch die Strukturierung ein Strömungswiderstand vergrößert werden, sodass die zu trocknende Luft länger mit dem Formkörper in Kontakt bleiben kann, wodurch ebenfalls die Trocknungsleistung erhöht werden kann.

Erfindungsgemäß können in oder an den Luftströmungskanälen des Formkörpers vorzugsweise Störelemente vorgesehen sein. Die Störelemente sind integral mit dem Formkörper ausgebildet. Durch derartige Störelemente kann ein Strömungswiderstand vergrößert werden, sodass die zu trocknende Luft länger mit dem Formkörper in Kontakt bleiben kann, wodurch die Trocknungsleistung erhöht werden kann.

In einer noch weiteren Ausgestaltung der Erfindung kann der Formkörper vorzugsweise in dem Patronengehäuse in axialer Richtung mittels wenigstens eines Federelements gehalten sein. Das Federelement soll eine stetige Axialkraft auf den Formkörper (und ggf. den Trockenmittelbehälter) ausüben, um übermäßige Vibrationen zu vermeiden und den Formkörper vor mechanischen Belastungen zu schützen. Im Vergleich zu herkömmlichen Lufttrocknerpatronen mit Trockenmittelgranulat genügt aber eine geringere Federkraft, sodass ein kleineres und/oder schwächeres Federelement eingesetzt werden kann. Bei dem Federelement handelt es sich bevorzugt um eine Druckfeder, eine Tellerfeder oder ein Distanzstück aus einem elastischen Material (z.B. Gummi) .

In einer Ausgestaltung der Erfindung kann der Formkörper vorzugsweise in einem Trockenmittelbehälter aufgenommen sein, der in dem Patronengehäuse angeordnet und bevorzugt auch darin befestigt ist.

In einer alternativen Ausgestaltung der Erfindung kann auf einen solchen Trockenmittelbehälter auch verzichtet werden und kann der Formkörper vorzugsweise direkt in einer Aufnahme des Patronengehäuses eingesetzt sein. Bei dieser Ausgestaltung kann am Außenumfang des Formkörpers vorzugsweise wenigstens eine Nut ausgebildet sein, in der die Luft zwischen dem Formkörper und dem Patronengehäuse hindurch strömen kann. Diese wenigstens eine Nut ist bevorzugt spiralförmig entlang des Außenumfangs des Formkörpers ausgestaltet, sodass die Luft in der Nut wie in einem Zyklon aufwärts strömen kann. Der Formkörper kann in diesem Fall neben der Trocknungsfunktion auch die Funktion eines Zyklonfilters übernehmen.

In einer weiteren Ausgestaltung der Erfindung kann die Lufttrocknerpatrone vorzugsweise mehrere Formkörper aus Trockenmittel aufweisen, die in dem Strömungskanal bzw. in der Luftströmungsrichtung hintereinander und/oder nebeneinander in dem Patronengehäuse angeordnet sind. Die mehreren Formkörper können wahlweise gleich oder unterschiedlich zueinander ausgestaltet sein. Ebenso können die Luftströmungskanäle in den Formkörpern zwischen den Formkörpern gleich oder unterschiedlich zueinander angeordnet, dimensioniert oder ausgestaltet sein. Durch das Vorsehen mehrerer Formkörper aus Trockenmittel kann die Lufttrocknerpatrone individuell zusammengebaut und angepasst werden. Durch das Vorsehen mehrerer Formkörper aus Trockenmittel können die einzelnen Formkörper bevorzugt kleiner und einfacher sein und damit vorzugsweise einfacher herstellbar sein.

Obige sowie weitere Vorteile, Merkmale und Anwendungsmöglichkeiten der Erfindung werden aus der nachfolgenden Beschreibung von verschiedenen Ausführungsbeispielen anhand der beiliegenden Zeichnungen besser verständlich. Darin zeigen, größtenteils schematisch:
- Fig. 1: eine Perspektivansicht einer in Längsrichtung aufgeschnittenen Lufttrocknerpatrone gemäß einem Ausführungsbeispiel der Erfindung; und
- Fig. 2: eine Teilquerschnittsansicht eines Formkörpers aus Trockenmittel der Lufttrocknerpatrone von Fig. 1 gemäß einem Ausführungsbeispiel der Erfindung.

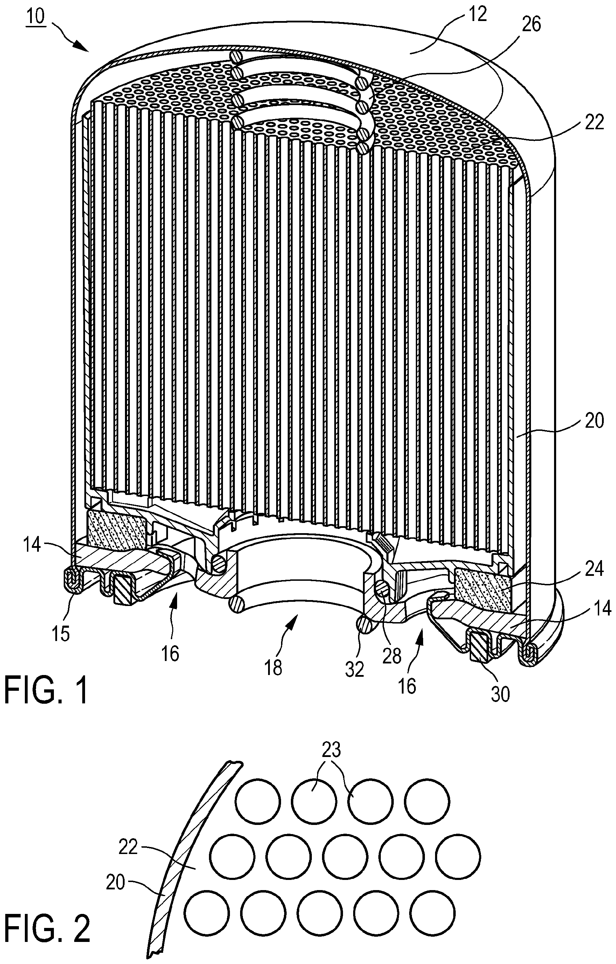

Fig. 1 zeigt ein perspektivisches Schnittbild einer Lufttrocknerpatrone 10 gemäß einem Ausführungsbeispiel der Erfindung. Diese Lufttrocknerpatrone 10 kann in vorteilhafter Weise in einer Druckluftaufbereitungsvorrichtung eines Nutzfahrzeugs eingesetzt werden, ohne dass die Erfindung auf diese spezielle Anwendung beschränkt sein soll.

Die Lufttrocknerpatrone 10 weist ein im Wesentlichen zylindrisches Patronengehäuse 12 zum Beispiel aus einem Kunststoffmaterial oder einem Metallblech auf, das an einer Seite (oben in Fig. 1) in Form eines haubenförmigen Deckels geschlossen ausgestaltet ist. An der anderen Seite (unten in Fig. 1) ist das Patronengehäuse 12 mit einem Gehäuseboden 14 verschlossen. Der Gehäuseboden 14 und das Patronengehäuse 12 sind über eine Bördelung 15 fest miteinander verbunden.

In dem Gehäuseboden 14 sind in Umfangsrichtung verteilt mehrere Lufteinströmöffnungen 16 vorgesehen, durch welche Druckluft in das Innere des Patronengehäuses 12 einströmen kann. Außerdem weist der Gehäuseboden 14 eine zentrale Luftausströmöffnung 18 auf, durch welche Druckluft das Patronengehäuse 12 wieder verlassen kann. Im Bereich der Lufteinströmöffnungen 16 sind Filter 24 (z.B. ein ringförmiges Filterelement) vorgesehen, um Öl- und Schmutzpartikel aus der in das Patronengehäuse 12 einströmenden Druckluft zurückzuhalten.

Die Lufttrocknerpatrone 10 kann beispielsweise mittels eines Bajonett- oder Schraubverschlusses (nicht dargestellt) an einer Druckluftaufbereitungsvorrichtung eines Nutzfahrzeugs angeschlossen und befestigt werden. Dabei werden die Lufteinströmöffnungen 16 und die Luftausströmöffnung 18 der Lufttrocknerpatrone 10 mit entsprechenden Druckluftanschlüssen der Druckluftaufbereitungsvorrichtung in Fluidverbindung gebracht. Im Bereich der Öffnungen 16, 18 sind in diesem Zusammenhang geeignete Dichtungselemente (z.B. O-Ring-Dichtungen) 30, 32 vorgesehen, wie in Fig. 1 dargestellt.

Im Innern des Patronengehäuses 12 ist ein Trockenmittelbehälter 20 angeordnet. Dieser Trockenmittelbehälter 20 ist im Wesentlichen zylindrisch ausgebildet und weist auf der dem Gehäuseboden 14 zugewandten Seite einen luftdurchlässigen, zum Beispiel gitterartigen Boden auf. Auf einen Deckel für den Trockenmittelbehälter 20 kann vorzugsweise verzichtet werden. Zwischen dem Trockenmittelbehälter 20 und dem Gehäuseboden 14 sind vorzugsweise Dichtungselemente 28 vorgesehen, um die zentrale Luftausströmöffnung 18 radial gegen die äußeren Lufteinströmöffnungen 16 abzudichten. Der Trockenmittelbehälter 20 ist zum Beispiel aus Kunststoff oder Metall gefertigt.

In dem Trockenmittelbehälter 20 ist ein zylindrischer Formkörper 22 aus einem Trockenmittel, vorzugsweise aus einem Molekularsieb (Zeolithe) angeordnet. In dem gezeigten Ausführungsbeispiel ist der Formkörper 22 in dem Trockenmittelbehälter 20 mittels Presspassung fixiert. Zum Beispiel hat ein Außendurchmesser des Formkörpers 22 ein leichtes Übermaß von beispielsweise etwa 1% bis etwa 3% gegenüber einem Innendurchmesser des Trockenmittelbehälters 20. Zusätzlich oder alternativ kann der Formkörper 22 mit dem Trockenmittelbehälter 20 auch verklebt oder verschweißt sein. Bei der Fixierung des Formkörpers 22 im Trockenmittelbehälter 20 ist auch darauf zu achten, dass kein Bypass entsteht, durch den die Druckluft an dem Formkörper 22 vorbeiströmen kann, ohne getrocknet zu werden.

Um den Formkörper 22 in axialer Richtung gegen Vibrationen zu schützen, ist bevorzugt zwischen dem Deckelabschnitt des Patronengehäuses 12 und dem Formkörper 22 ein Federelement 26 vorgesehen. In dem gezeigten Ausführungsbeispiel ist das Federelement 26 als eine Druckfeder ausgebildet. Alternativ kann für das Federelement 26 zum Beispiel auch eine Tellerfeder oder ein Distanzstück aus Gummi verwendet werden. Das Federelement 26 übt eine stetige Axialkraft auf den Formkörper 22 und auch auf den Trockenmittelbehälter 20 aus.

In einer alternativen Ausführungsform kann das Federelement auch integral mit dem Trockenmittelbehälter 20 ausgebildet sein. So kann der Trockenmittelbehälter 20 zum Beispiel an seinem oberen offenen Rand mit mehreren Laschen ausgebildet sein, die beim Einsetzen des Trockenmittelbehälters 20 in das Patronengehäuse 12 umgebogen werden. Die umgebogenen Laschen erzeugen eine entsprechende Federkraft auf den Trockenmittelbehälter 20, um diesen im Patronengehäuse 12 zu fixieren.

Der Formkörper 22 ist zum Beispiel aus einem zeolithischen Trockenmittel mittels eines Extrusionsverfahrens gefertigt. Bei diesem Extrusionsverfahren wird in dem Formkörper 22 zugleich eine Vielzahl von Luftströmungskanälen 23 ausgebildet. Alternativ kann der Formkörper 22 auch aus einem anderen Trockenmittel (z.B. Trockenton, Kieselgel, etc.) oder mittels anderer Herstellungsverfahren (z.B. Schichtaufbau) gefertigt werden.

Wie in Fig. 2 veranschaulicht, sind diese Luftströmungskanäle 23 zum Beispiel hexagonal nebeneinander angeordnet und weisen jeweils eine im Wesentlichen kreisförmige Querschnittsform auf. Alternativ sind auch andere Querschnittsformen (z.B. polygonal, quadratisch, elliptisch, etc.) und andere Anordnungen (z.B. quadratisches Raster, etc.) für die Luftströmungskanäle 23 im Formkörper 22 denkbar. Um den Strömungswiderstand und damit die Verweildauer der Druckluft in den Luftströmungskanälen 23 zu erhöhen und damit die Trocknungsleistung zu verbessern, können die Wände der Luftströmungskanäle 23 strukturiert werden und/ oder können in die Luftströmungskanäle 23 geeignete Störelemente (z.B. Wandelemente, Kugelkörper, etc.) eingebracht werden. Die Störelemente können zum Beispiel eine gewisse turbulente Luftströmung in den Luftströmungskanälen 23 erzeugen.

In dem Ausführungsbeispiel von Fig. 1 verlaufen die Luftströmungskanäle 23 jeweils im Wesentlichen geradlinig und im Wesentlichen parallel zueinander in axialer Richtung durch den Formkörper 22 hindurch. In anderen Ausführungsformen können die Luftströmungskanäle auch ein- oder mehrfach gekrümmt verlaufen oder zum Beispiel spiralförmig ausgebildet sein.

In dem Ausführungsbeispiel von Fig. 1 ist der Formkörper 22 in einen Trockenmittelbehälter 20 eingesetzt, der in dem Patronengehäuse 12 fixiert ist. Wahlweise kann auf diesen Trockenmittelbehälter 20 auch verzichtet werden. D.h. der Formkörper 22 kann auch direkt in dem Patronengehäuse 12 verbaut werden. Hierzu weist das Patronengehäuse 12 dann bevorzugt geeignete Aufnahmen, Schnittstellen und dergleichen auf, um den Formkörper 22 darin zu fixieren.

Die Funktionsweise der oben beschriebenen Lufttrocknerpatrone 10 ist wie folgt.

Zur Druckluftaufbereitung wird Druckluft von der Druckluftaufbereitungsvorrichtung durch die Lufteinströmöffnungen 16 im Gehäuseboden 14 mittels der Filter 24 von Öl- und Schmutzpartikeln gereinigt und dann in den Ringspalt zwischen dem Patronengehäuse 12 und dem Trockenmittelbehälter 20 eingeleitet. Die Druckluft strömt durch diesen Ringspalt nach oben und wird dann an dem haubenförmigen Deckel des Patronengehäuses 12 umgelenkt und in die Luftströmungskanäle 23 im Formkörper 22 eingeleitet. Während des axialen Durchströmens dieser Luftströmungskanäle 23 nach unten wird die Druckluft durch das Trockenmittel des Formkörpers 22 getrocknet, bevor sie durch die zentrale Luftausströmöffnung 18 in dem Gehäuseboden 14 wieder zurück in die Druckluftaufbereitungsvorrichtung geleitet wird. Die gereinigte und getrocknete Druckluft kann dann bei Bedarf Druckluftverbrauchern des Nutzfahrzeugs zugeführt werden.

Der Formkörper 22 mit seinen Luftströmungskanälen 23 übernimmt aber vorzugsweise nicht nur die Trocknungsfunktion für die Druckluft, sondern kann zusätzlich als eine Art Koaleszenzfilter dienen. Die durch die Luftströmungskanäle 23 hindurch strömende Druckluft kann auch nach dem Durchströmen der Filter 24 noch klebrige Substanzen wie Öle enthalten, die dann an den Wandungen der Luftströmungskanäle 23 haften bleiben können. Dieser Effekt kann durch strukturierte Wände der Luftströmungskanäle 23 noch verstärkt werden. Die an den Wänden anhaftenden klebrigen Substanzen können dann zum Beispiel andere in der Druckluft enthaltene Schmutzpartikel auffangen. Es kann deshalb gegebenenfalls auf die Filter 24 oder zusätzliche Koaleszenzfilter in oder an der Lufttrocknerpatrone verzichtet werden.

Optional kann für die Lufttrocknerpatrone 10 auch ein Regenerationsprozess vorgesehen sein, in dem der Formkörper 22 aus Trockenmittel regeneriert wird, um wieder Feuchtigkeit aufnehmen zu können.

Bei dem oben beschriebenen Ausführungsbeispiel von Fig. 1 durchströmt die Druckluft den Formkörper 22 bzw. dessen Luftströmungskanäle 23 einmal von oben nach unten. In anderen Ausführungsformen (nicht dargestellt) kann der Formkörper 22 auch mehrfach durchströmt werden. Zum Beispiel kann die Druckluft nach Durchströmen der Filter 24 in die äußeren Luftströmungskanäle 23 im Formkörper 22 eingeleitet werden. Am oberen Ende des Formkörpers 22 strömt die Druckluft aus dem Formkörper 22 und wird an dem haubenförmigen Deckel des Patronengehäuses 12 umgelenkt und in die zentralen Luftströmungskanäle 23 im Formkörper 22 eingeleitet. Während des axialen Durchströmens dieser Luftströmungskanäle 23 nach unten wird die Druckluft durch das Trockenmittel des Formkörpers 22 weiter getrocknet, bevor sie durch die zentrale Luftausströmöffnung 18 in dem Gehäuseboden 14 wieder zurück in die Druckluftaufbereitungsvorrichtung geleitet wird.

Bei dieser Variante dichtet der Trockenmittelbehälter 20 bevorzugt an seinem Außenumfang mit dem Patronengehäuse 12 ab und weist der Trockenmittelbehälter 20 an seiner unteren Stirnseite neben der zentralen Ausströmöffnung zusätzlich ein oder mehrere Einströmöffnungen auf, durch welche die Druckluft in die äußeren Luftströmungskanäle 23 des Formkörpers 22 gelangen kann. Ein direktes Strömen der Druckluft von diesen Einströmöffnungen zur zentralen Ausströmöffnung (Bypass) wird vorzugsweise durch ein flaches, ringförmiges Dichtelement zwischen dem Boden des Trockenmittelbehälters 20 und dem Formkörper 22 vermieden.

In dem oben beschriebenen Ausführungsbeispiel von Fig. 1 ist in dem Patronengehäuse 12 im Strömungskanal zwischen den Lufteinströmöffnungen 16 und der Luftausströmöffnung 18 genau ein Formkörper 22 aus Trockenmittel angeordnet. In anderen Ausführungsformen der Erfindung können auch mehrere solcher Formkörper 22 hintereinander und/oder nebeneinander im Strömungskanal angeordnet sein. Diese mehreren Formkörper 22 können dann wahlweise identisch oder analog ausgebildet sein oder unterschiedlich zueinander ausgestaltet sein. Durch das Vorsehen mehrerer Formkörper 22 entsteht eine größere Flexibilität hinsichtlich der Form und der Größe des insgesamt bereitgestellten Trockenmittel-Formkörpers und auch hinsichtlich der Gestaltung der Luftströmungskanäle 23, die in kleineren Formkörpern 22 ggf. einfacher herzustellen sind. Beispielsweise können ein oder mehrere erste Formkörper, die mit den Lufteinströmöffnungen 16 in Fluidverbindung stehen, und ein oder mehrere zweite Formkörper, die mit der Luftausströmöffnung in Fluidverbindung stehen, nebeneinander angeordnet sind. In einer anderen Ausführungsform können mehrere Formkörper 22 aufeinander gestapelt sein. Dabei können ihre Luftströmungskanäle 23 leicht zueinander versetzt angeordnet sein und/oder können Gitterelemente oder dergleichen als Störelemente zwischen ihnen angeordnet sein.

Während in dem oben beschriebenen Ausführungsbeispiel von Fig. 1 der Formkörper 22 in einem Trockenmittelbehälter 20 in dem Patronengehäuse 12 angeordnet ist, ist es auch denkbar, auf einen solchen Trockenmittelbehälter 20 zu verzichten und den Formkörper 22 direkt in eine Aufnahme des Patronengehäuses 12 einzusetzen. Bei dieser (nicht dargestellten) Ausführungsform der Erfindung können am Außenumfang des Formkörpers 22 zusätzlich Nuten ausgebildet sein, in denen die Luft zwischen dem Formkörper 22 und dem Patronengehäuse 12 hindurch strömen kann. Der Formkörper 22 sollte dabei möglichst eng am Patronengehäuse 12 anliegen. Die Nuten sind vorzugsweise spiralförmig entlang des Außenumfangs des Formkörpers 22 ausgestaltet, sodass die Luft in ihnen wie in einem Zyklon aufwärts strömen kann und der Formkörper 22 zusätzlich eine Zyklonfilter-Funktion übernehmen kann.

## Patentansprüche

1. Lufttrocknerpatrone (10), insbesondere für eine Druckluftaufbereitungsvorrichtung eines Nutzfahrzeugs, aufweisend:
ein Patronengehäuse (12) mit wenigstens einer Lufteinströmöffnung (16) und wenigstens einer Luftausströmöffnung (18); und i
wenigstens einen Formkörper (22), der in einem Strömungskanal zwischen der wenigstens einen Lufteinströmöffnung (16) und der wenigstens einen Luftausströmöffnung (18) in dem Patronengehäuse (12) angeordnet ist und eine Vielzahl von durch ihn hindurch verlaufenden Luftströmungskanälen (23) aufweist,
wobei der Formkörper (22) aus einem Trockenmittel gefertigt ist,
**dadurch gekennzeichnet, dass** in oder an den Luftströmungskanälen (23) des Formkörpers (22) Störelemente vorgesehen sind, wobei die Störelemente integral mit dem Formkörper (22) ausgebildet sind.

2. Lufttrocknerpatrone (10) nach Anspruch 1, bei welcher die Luftströmungskanäle (23) des Formkörpers (22) jeweils eine im Wesentlichen kreisförmige Querschnittsform haben.

3. Lufttrocknerpatrone (10) nach Anspruch 1 oder 2, bei welcher die Luftströmungskanäle (23) des Formkörpers (22) im Wesentlichen hexagonal nebeneinander angeordnet sind.

4. Lufttrocknerpatrone (10) nach einem der vorhergehenden Ansprüche, bei welcher die Wände der Luftströmungskanäle (23) des Formkörpers (22) strukturiert sind.

5. Lufttrocknerpatrone (10) nach einem der vorhergehenden Ansprüche, bei welcher der Formkörper (22) in dem Patronengehäuse (12) in axialer Richtung mittels wenigstens eines Federelements (26) gehalten ist.

6. Lufttrocknerpatrone (10) nach einem der Ansprüche 1 bis 5, bei welcher der Formkörper (22) in einem Trockenmittelbehälter (20) aufgenommen ist, welcher in dem Patronengehäuse (12) angeordnet ist.

7. Lufttrocknerpatrone (10) nach einem der Ansprüche 1 bis 5, bei welcher das Patronengehäuse (12) eine Aufnahme aufweist, in welcher der Formkörper (22) eingesetzt ist.

8. Lufttrocknerpatrone (10) nach Anspruch 7, bei welcher an einem Außenumfang des Formkörpers (22) wenigstens eine Nut ausgebildet ist, wobei diese wenigstens eine Nut bevorzugt spiralförmig entlang des Außenumfangs des Formkörpers ausgestaltet ist.

9. Lufttrocknerpatrone (10) nach einem der vorhergehenden Ansprüche, welche mehrere Formkörper (22) aus Trockenmittel aufweist, die in dem Strömungskanal hintereinander und/oder nebeneinander in dem Patronengehäuse (12) angeordnet sind.

10. Lufttrocknerpatrone (10) nach einem der vorhergehenden Ansprüche, bei welcher der Formkörper (22) ein durch ein Extrusionsverfahren hergestellter Formkörper ist.

## Claims

1. Air drier cartridge (10), in particular for a compressed air treatment device of a commercial vehicle, comprising:
a cartridge housing (12) with at least one air inflow opening (16) and at least one air outflow opening (18); and
at least one shaped body (22) which is arranged in a flow duct between the at least one air inflow opening (16) and the at least one air outflow opening (18) in the cartridge housing (12) and has a multiplicity of air flow ducts (23) running therethrough,
wherein the shaped body (22) is produced from a desiccant,
**characterised in that** interfering elements are provided in or at the air flow ducts (23) of the shaped body (22), the interfering elements being designed integral with the shaped body (22).

2. Air drier cartridge (10) according to claim 1, wherein the air flow ducts (23) of the shaped body (22) each have a substantially circular cross-sectional shape.

3. Air drier cartridge (10) according to claim 1 or 2, wherein the air flow ducts (23) of the shaped body (22) are arranged substantially hexagonally next to one another.

4. Air drier cartridge (10) according to any of the preceding claims, wherein the walls of the air flow ducts (23) of the shaped body (22) are textured.

5. Air drier cartridge (10) according to any of the preceding claims, wherein the shaped body (22) is held in the axial direction in the cartridge housing (12) by means of at least one spring element (26).

6. Air drier cartridge (10) according to any of claims 1 to 5, wherein the shaped body (22) is accommodated in a desiccant container (20) which is arranged in the cartridge housing (12).

7. Air drier cartridge (10) according to any of claims 1 to 5, wherein the cartridge housing (12) has a receptacle in which the shaped body (22) is inserted.

8. Air drier cartridge (10) according to claim 7, wherein at least one groove is formed on an outer circumference of the shaped body (22), wherein said at least one groove is preferably configured spirally along the outer circumference of the shaped body.

9. Air drier cartridge (10) according to any of the preceding claims, which has a plurality of shaped bodies (22) consisting of desiccant, which are arranged in the cartridge housing (12) one behind another and/or next to one another in the flow duct.

10. Air drier cartridge (10) according to any of the preceding claims, wherein the shaped body (22) is a shaped body produced by an extrusion process.

## Revendications

1. Cartouche (10) de dessiccateur d'air, notamment pour un système de préparation d'air comprimé et d'un véhicule utilitaire, comportant :
une enveloppe (12) de cartouche, ayant au moins une ouverture (16) d'entrée d'air et au moins une ouverture (18) de sortie d'air et
au moins une pièce (22) moulée, qui est disposée dans un canal d'écoulement entre la au moins une ouverture (16) d'entrée d'air et la au moins une sortie (18) d'air de l'enveloppe (12) de la cartouche et qui a une pluralité de canaux (23) d'écoulement d'air la traversant, la pièce (22) moulée étant fabriquée en un agent déshydratant,
**caractérisé en ce que**
des éléments perturbateurs sont prévus dans les canaux (23) d'écoulement d'air de la pièce (22) moulée, les éléments perturbateurs venant de moulage avec la pièce(22) moulée.

2. Cartouche (10) de dessiccateur d'air suivant la revendication 1, dans laquelle les canaux (23) d'écoulement d*''*air de la pièce (22) moulée ont chacun une forme de section transversale sensiblement circulaire.

3. Cartouche (10) de dessiccateur d'air suivant la revendication 1 ou 2, dans laquelle les canaux (23)' d'écoulement d'air de la pièce (22) moulée sont disposés les uns à côté des autres sensiblement en hexagone.

4. Cartouche (10) de dessiccateur d'air suivant l'une des revendications précédentes, dans laquelle, les parois des canaux (23) d'écoulement d'air de la pièce (22) moulée sont structurées.

5. Cartouche (10) de dessiccateur d'air suivant l'une des revendications précédentes, dans laquelle la pièce (22) moulée est maintenue dans l'enveloppe (12) de la cartouche, dans la direction axiale, au moyen d'un élément (26) de ressort.

6. Cartouche (10) de dessiccateur d'air suivant l'une des revendications 1 à 5, dans laquelle la pièce (22) moulée est reçue dans un récipient (20) d'agent déshydratant, qui est disposé dans l'enveloppe (12) de la cartouche.

7. Cartouche (10) de dessiccateur d'air suivant l'une des revendications 1 à 5, dans laquelle l'enveloppe (12) de la cartouche a un logement dans lequel la pièce (22) moulée est insérée.

8. Cartouche (10) de dessiccateur d'air suivant la revendication 7, dans laquelle au moins une rainure est formée sur un pourtour extérieur de la pièce (22) moulée, cette au moins une rainure étant conformée de préférence en forme de spirale le long du pourtour extérieur de la pièce moulée.

9. Cartouche (10) de dessiccateur d'air suivant l'une des revendications précédentes, qui a plusieurs pièces (22) moulées en agent déshydratant, qui sont disposées dans le canal d'écoulement, les unes derrière les autres et/ou les unes à côté des autres dans l'enveloppe (12) de la cartouche.

10. Cartouche (10) de dessiccateur d'air suivant l'une des revendications précédentes, dans laquelle la pièce (22) moulée est une pièce moulée produite par un procédé d'extrusion.
